# EUROPEAN PATENT APPLICATION

(11) **EP 4 068 193 A1**
(43) Date of publication of application: **05.10.2022**
(21) Application number: 20861981.7
(22) Date of filing: 25.09.2020
(51) Int. Cl.: G06Q 50/10

(54) **SYSTEM, METHOD, AND PROGRAM**

(30) Priority: 28.11.2019 JP 2019214952
(71) Applicant: Yokogawa Electric Corporation, Musashino-shi, Tokyo 180-8750 (JP)
(72) Inventor: KURODA, Tomohiro, Musashino-shi, Tokyo 180-8750 (JP); ISHII, Yosuke, Musashino-shi, Tokyo 180-8750 (JP); HAYASHIZAKI, Hironori, Musashino-shi, Tokyo 180-8750 (JP); SAKUMA Kei, Musashino-shi, Tokyo 180-8750 (JP)
(74) Representative: Winter, Brandl - Partnerschaft mbB
(86) International application number: PCT/JP2020/036160
(87) International publication number: WO 2021/106340

(57) **Abstract**

Provided is a system comprising a data collection unit configured to collect, from equipment capable of acquiring measurement data obtained by measuring physical quantities of a measurement target, the measurement data, a contract term registration unit configured to register a term of a contract to disclose the measurement data to a contractor, a judgement unit configured to judge whether the contract has been concluded, a data disclosure unit configured to disclose the measurement data to the contractor in response to conclusion of the contract, and a charging processing unit configured to perform processing for charging an amount according to a consideration for disclosure of the measurement data to the contractor, based on the term of the contract.

## Description

### BACKGROUND

### 1. TECHNICAL FIELD

The present invention relates to a system, a method and a program.

### 2. RELATED ART

Conventionally, an electronic payment system for electrically performing payment for purchased commodities and services is known. (See Patent Literature 1 and 2, for example). In addition, a concept of "information bank" for collecting and utilizing personal information has been proposed. (See Non-Patent Literature 1, for example).

### [Citation List]

### [Patent Literature]

[Patent Literature 1] Japanese Patent Application Publication No. 2002-109216
[Patent Literature 2] Japanese Patent Application Publication No. 2012-155718

### [Non-Patent Literature]

[Non-Patent Literature 1] Hideki Sunahara, et al., "Concept of 'Information Bank' and Its Technical Issues," Multimedia, Distributed, Cooperative, and Mobile Symposium 2014 papers (2014), July 2014, p.p. 1024-1026.

### Technical Problem

In Patent Literature 1 and 2, the target of a transaction is a commodity or a service, and information is not taken into account as a target of transaction. In Non-Patent Literature 1, an idea for collecting and utilizing information is proposed, but it is not specifically indicated how to realize transactions of information. Means for embodying transactions of information are desired.

### GENERAL DISCLOSURE

In order to solve the above-described issues, a first aspect of the present invention provides a system. The system may include a data collection unit configured to collect, from equipment capable of acquiring measurement data obtained by measuring physical quantities of a measurement target, the measurement data. The system may include a contract term registration unit configured to register a term of a contract to disclose the measurement data to a contractor. The system may include a judgement unit configured to judge whether the contract has been concluded. The system may include a data disclosure unit configured to disclose the measurement data to the contractor in response to conclusion of the contract. The system may include a charging processing unit configured to perform processing for charging an amount according to a consideration for disclosure of the measurement data to the contractor, based on the term of the contract.

The system may further include an equipment information registration unit configured to register, for each of the equipment, a disclosure flag indicating whether the measurement data can be disclosed, and the judgement unit may judge whether the contract has been concluded based on the disclosure flag.

The disclosure flag can be set to a different value according to the contractor.

The charging processing unit may perform processing for charging to the contractor based on a usage fee for at least either one of the equipment or a service using the equipment, and the consideration.

The charging processing unit may perform processing for returning, to a user of the equipment or the service, an amount according to the consideration from the usage fee.

The system may manage the measurement data collected by the data collection unit using a distributed ledger.

The system may record a hash value obtained by hashing the measurement data in the distributed ledger, and record the measurement data in another database that is different from the distributed ledger.

The contract term registration unit may be capable of setting a unit price for the measurement data.

The contract term registration unit may determine the unit price for the measurement data based on a transaction result of the measurement data.

The contract term registration unit may determine the unit price for the measurement data by an auction system.

The data disclosure unit may supply the measurement data to the contractor in response to conclusion of the contract.

The data disclosure unit may permit access to the measurement data by the contractor in response to conclusion of the contract.

A second aspect of the present invention provides a method. The method may be a method executed by a system. The method may include collecting, by the system, from equipment capable of acquiring measurement data obtained by measuring physical quantities of a measurement target, the measurement data. The method may include registering, by the system, a term of a contract to disclose the measurement data to a contractor. The method may include judging, by the system, whether the contract has been concluded. The method may include disclosing, by the system, the measurement data to the contractor in response to conclusion of the contract. The method may include performing, by the system, processing for charging an amount according to a consideration for disclosure of the measurement data to the contractor, based on the term of the contract.

A third aspect of the present invention provides a program. The program may be executed by a computer. The program may cause the computer to function as a data collection unit configured to collect, from equipment capable of acquiring measurement data obtained by measuring physical quantities of a measurement target, the measurement data. The program may cause the computer to function as a contract term registration unit configured to register a term of a contract to disclose the measurement data to a contractor. The program may cause the computer to function as a judgement unit configured to judge whether the contract has been concluded. The program may cause the computer to function as a data disclosure unit configured to disclose the measurement data to the contractor in response to conclusion of the contract. The program may cause the computer to function as a charging processing unit configured to perform processing for charging an amount according to a consideration for disclosure of the measurement data to the contractor, based on the term of the contract.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a system 100 according to the present embodiment, together with a communication network 10 and equipment 20.
Fig. 2 illustrates an example of usage of the system 100 according to the present embodiment.
Fig. 3 illustrates an example of a flow for registration of a contract term by the contract term registration unit 120
Fig. 4 illustrates an example of a flow for registration of information related to the equipment 20 and services 30 by the equipment information registration unit 130.
Fig. 5 illustrates an example of a flow for recording of measurement data by the usage status recording unit 140.
Fig. 6 illustrates an example of a flow of processing for charging by the system 100 in response to disclosure of the data.
Fig. 7 illustrates another example of usage of the system 100 according to the present embodiment.
Fig. 8 illustrates a system 100 according to a variant of the present embodiment, together with a communication network 10 and equipment 20.
Fig. 9 illustrates an example of a computer 2200 through which a plurality of aspects of the present invention may be entirely or partially embodied.

### DESCRIPTION OF EXEMPLARY EMBODIMENTS

Hereinafter, the present invention will be described through embodiments of the invention, but the following embodiments are not intended to limit the invention of the claims. Further, not all of the combinations of features described in the embodiments are essential for means to solve the problem in the invention.

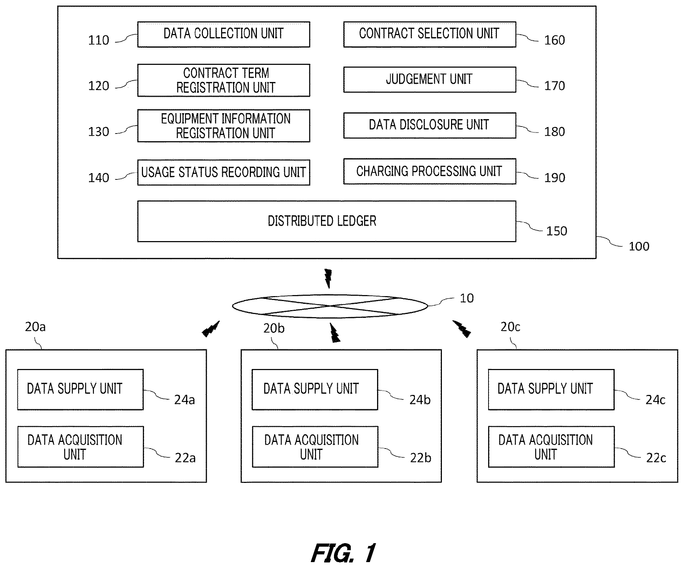

Fig. 1 illustrates a system 100 according to the present embodiment, together with a communication network 10 and equipment 20. The system 100 according to the present embodiment collects data from the equipment 20 via the communication network 10, for example. The system 100 then pre-registers a term of a contract for transaction of data, and when the contract is concluded, discloses the data to the contractor, as well as perform processing for charging an amount according to the disclosed consideration to a contractor. Note that, although three equipment 20a, 20b, and 20c (collectively referred to as "equipment 20") are illustrated as equipment 20 in the present drawing, the system 100 may set, as the target of transaction, data collected from one or more equipment 20, including more than three or less than three equipment.

In the present embodiment, a case in which the system 100 sets, as the target of transaction, measurement data collected from IIoT equipment provided in a plant is illustrated as an example. However, it is not limited thereto. The system 100 may set, as the target of transaction, various so-called big data, such as location information of a terminal, purchase results of commodities by users, access history, and the like, for example.

The communication network 10 is a network connecting a plurality of computers. For example, the communication network 10 may be a global network interconnecting a plurality of computer networks, and the communication network 10 may be the Internet or the like using the Internet protocol, as an example. Alternatively, the communication network 10 may be implemented by a dedicated line. The communication network 10 interconnects the equipment 20, services 30 (not illustrated), and the system 100.

The equipment 20 acquires data set as the target of transactions by the system 100, and supplies the acquired data to the system 100. The equipment 20 may be capable of acquiring measurement data obtained by measuring physical quantities of a measurement target. The equipment 20 may be Internet of Things (IoT) equipment, for example. As an example, the equipment 20 may be Industrial Internet of Things (IIoT) equipment connected to one or more field devices provided in a plant, or integrally formed therewith.

Such plant here may be, for example, besides an industrial plant such as a chemical plant, a plant for managing and controlling a wellhead or its surrounding area of a gas field, an oil field or the like, a plant for managing and controlling power generation such as hydraulic power generation, thermal power generation and nuclear power generation, a plant for managing and controlling energy harvesting such as solar photovoltaic generation, wind power generation or the like, and a plant for managing and controlling water and sewerage, a dam or the like.

Moreover, a field device provided in such plant may be, for example, a pressure gauge, a flow meter, a sensor device such as a temperature sensor, a valve device such as a flow control valve or an on-off valve, an actuator device such as a fan or a motor, an imaging device such as a camera or a video camera for capturing a situation or an object in the plant, an audio device such as a microphone or a speaker for collecting noises or the like in the plant or emitting an alarm or the like, and a location detection device for outputting location information of each device, or the like.

The equipment 20 each have a data acquisition unit 22 and a data supply unit 24. That is, the equipment 20a has a data acquisition unit 22a and a data supply unit 24a, the equipment 20b has a data acquisition unit 22b and a data supply unit 24b, and the equipment 20c has a data acquisition unit 22c and a data supply unit 24c. Herein, when it is not necessary to particularly differentiate, the data acquisition units 22a, 22b, and 22c are collectively referred to as the data acquisition unit 22. In addition, the data supply units 24a, 24b, and 24c are collectively referred to as the data supply unit 24.

The data acquisition unit 22 acquires data set as the target of transaction by the system 100. As an example, the data acquisition unit 22 acquires measurement data by measuring physical quantities of the measurement target by itself. Alternatively, or additionally, the data acquisition unit 22 acquires, from other equipment, measurement data obtained by measuring physical quantities of the measurement target by other equipment (for example, field devices or the like). The data acquisition unit 22 may acquire, as the measurement data, data that can be measured in SI unit system such as temperature, pressure, flow rate, magnetic field, acceleration, location, camera images, on/off data of a switch, sound, step count, distance, calories, weights, or the like, indicators calculated based on physical quantities, and combinations thereof, for example. In addition, the data acquisition unit 22 may acquire, as the measurement data, a value generated using a formula based on these data. The data acquisition unit 22 provides the data supply unit 24 with the acquired data.

The data supply unit 24 supplies the data provided from the data acquisition unit 22 to the system 100. At this time, the data supply unit 24 may provide the data to be supplied to the system 100 with an electronic signature for identifying the equipment 20 which acquired said data. As an example, the data supply unit 24 may be a communication unit, and supplies the measurement data to the system 100 via the communication network 10, for example. Alternatively, or additionally, the data supply unit 24 may be an output unit capable of outputting the measurement data in various forms, and may write out the measurement data to various memory devices or the like and supply it to the system 100, for example.

The service 30 is provided from a vendor to the user. The service 30 may be a service using the equipment 20, for example. As an example, the service 30 may be a service for operating a plant using the equipment 20.

The system 100 may be a computer, such as a personal computer (PC), a tablet-type computer, a smartphone, a work station, a server computer, or a general purpose computer, or may be a computer system in which a plurality of computers are connected. Such a computer system is also a computer in a broad sense. In addition, the system 100 may be implemented by one or more virtual computer environments that can be executed within a computer. Alternatively, the system 100 may be a dedicated computer designed for data transactions, or may be a dedicated hardware implemented by dedicated circuitry. In addition, when the system 100 can be connected to the Internet, the system 100 may be implemented through cloud computing.

The system 100 includes a data collection unit 110, a contract term registration unit 120, an equipment information registration unit 130, a usage status recording unit 140, a distributed ledger 150, a contract selection unit 160, a judgement unit 170, a data disclosure unit 180, and a charging processing unit 190.

The data collection unit 110 collects, from the equipment 20 capable of acquiring measurement data obtained by measuring physical quantities of a measurement target, the measurement data. As an example, the data collection unit 110 may be a communication unit, and collects the measurement data from the equipment 20 via the communication network 10, for example. Alternatively, or additionally, the data collection unit 110 may be an input unit capable of inputting the measurement data in various forms, and may read out and collect the measurement data from various memory devices or the like having the measurement data recorded thereon, for example.

The contract term registration unit 120 registers the term of a usage contract of the equipment 20, a usage contract of the service 30, and a contract to disclose the measurement data to a contractor. The contract term registration unit 120 accepts user inputs or the like, for example, and registers the terms of these contracts. Here, the terms of the contracts may include, for example, contract periods, payment method (meter rate charging, cycle billing, or the like), payment means (legal currency, virtual currency, tokens, points, or the like), and the like. The usage contract of the equipment 20 may further include, as a term of the contract, a unit price of the equipment 20. The usage contract of the service 30 may further include, as a term of the contract, a unit price of the service 30. In addition, the disclosure contract for the measurement data may further include, as the terms of the contract, the definition of data, recording method of the data (recording as raw data, encrypted recording, recording hash value, or the like), unit price of the data, releasing method of the data (providing the data, providing the access right, or the like), and the like. As discussed above, the contract term registration unit 120 may be capable of setting a unit price for at least the measurement data. Registration of the contract terms in a disclosure contract for the measurement data will be described below. The contract term registration unit 120 writes the registered contract terms in the distributed ledger 150.

The equipment information registration unit 130 registers, to the system 100, information related to the equipment 20 and the service 30 utilized by the user. The equipment information registration unit 130 accepts user inputs or the like, for example, and registers, for each of the equipment 20, an electronic signature for identifying the equipment 20 utilized by the user, and a disclosure flag indicating whether the measurement data collected from the equipment 20 can be disclosed. In addition, the equipment information registration unit 130 accepts, user inputs or the like, for example, and registers information for identifying the service 30 utilized by the user. The equipment information registration unit 130 writes the information related to the registered equipment 20 and service 30 to the distributed ledger 150.

The usage status recording unit 140 records the usage status of the equipment 20 and the service 30 to the system 100. The usage status recording unit 140 acquires the usage time of the equipment 20 for each user, for example, and records it in the distributed ledger 150. Similarly, the usage status recording unit 140 acquires the usage time of the service 30 for each user, for example, and records it in the distributed ledger 150. In addition, the usage status recording unit 140 records, to the distributed ledger 150, the measurement data collected by the data collection unit 110, together with the disclosure flag indicating whether said measurement data can be disclosed.

The distributed ledger 150 records various data. Here, the distributed ledger is a database using the distributed ledger technology including a block chain that is capable of recording data, and recording possession and transfer of crypto currency and assets. According to the distributed ledger technology, ledgers are arranged in a distributed manner on each of a plurality of computers connected through a network, and records are shared by synchronizing the contents of these ledgers among the plurality of computers. In the system 100, the distributed ledger 150 records the contract term, equipment information, usage status, measurement data, and the like, and share these information among a plurality of computers. In this manner, the system 100 manages the measurement data collected by the data collection unit 110 using the distributed ledger 150. At this time, the system 100 may record different information to distributed ledgers that are different for each pieces of information.

The contract selection unit 160 discloses a plurality of contracts of which the contract term is registered on the distributed ledger 150 to the user of the system 100. At this time, the contract selection unit 160 may, for example, display the plurality of contracts on a Web browser, or may display the plurality of contracts on an application. The contract selection unit 160 then accepts user inputs or the like, for example, and selects a contract desired to be concluded among the plurality of contracts.

The judgement unit 170 judges whether the contract selected by the contract selection unit 160 has been concluded. As an example, the judgement unit 170 may judge whether the contract has concluded based on the disclosure flag registered for each of the equipment 20. This will be described below. Alternatively, or additionally, the judgement unit 170 may accept a user input or the like, and may judge that the contract has been concluded when it is indicated that the user of the system 100 has agreed to the contract.

The data disclosure unit 180 discloses the measurement data to the contractor in response to conclusion of the contract. At this time, the data disclosure unit 180 may supply the measurement data itself to the contractor in response to conclusion of the contract. Alternatively, or additionally, the data disclosure unit 180 may permit access to the measurement data by the contractor in response to conclusion of the contract. As an example, the data disclosure unit 180 may display the measurement data for which the contract has been concluded on a Web browser, may display it on an application, or may output it to files such as CSV files. The data disclosure unit 180 provides the charging processing unit 190 with information related to the amount of data disclosed.

The charging processing unit 190 charges usage fee of the equipment 20, the service 30, and the measurement data among users of the system 100 in response to conclusion of the contract to perform adjustment processing. At this time, the charging processing unit 190 may perform processing for charging an amount according to a consideration for disclosure of the measurement data to the contractor, based on the term of the contract.

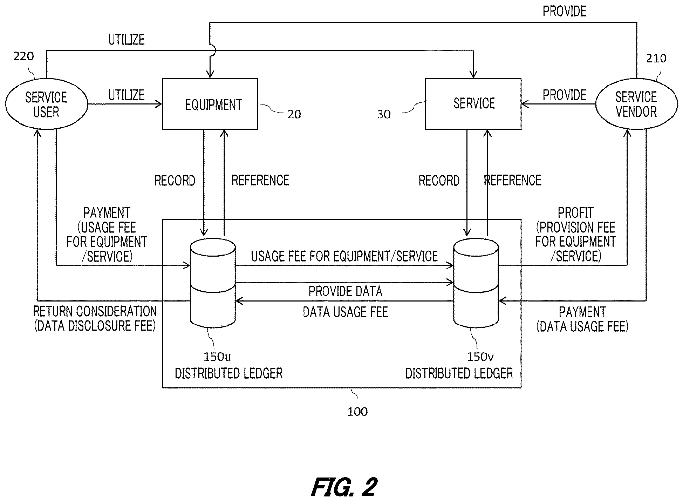

Fig. 2 illustrates an example of usage of the system 100 according to the present embodiment. In the present drawing, a case where the system 100 is used between a service vendor 210 and a service user 220 is illustrated as an example.

The service vendor 210 provides the service user 220 with at least either one of the equipment 20 and the service 30. The service vendor 210 then earns provision fee of at least either one of the equipment 20 and the service 30 as a profit.

The service user 220 utilizes at least either one of the equipment 20 and the service 30 provided by the service vendor 210. The service user 220 then pays the usage fee for at least either one of the equipment 20 and the service 30.

For example, the service vendor 210 provides the service user 220 with a plurality of equipment 20 and services 30. The service user 220 then installs the plurality of equipment 20 provided from the service vendor 210 in its own plant, and operates its own plant utilizing a service 30 using the plurality of equipment 20. At this time, the service user 220 provides the service vendor 210 with various measurement data acquired by the equipment 20 during operation of its own plant. The service vendor 210 then pays the usage fee for the measurement data, allowing the service user 220 to return a consideration according to the disclosure fee for the measurement data. The system 100 according to the present embodiment supports such transaction of measurement data between the service vendor 210 and the service user 220.

In particular, the system 100 according to the present embodiment carries out transactions of the measurement data using the
distributed ledger technology by arranging distributed ledgers 150v and 150u (the distributed ledgers 150v and 150u are collectively referred to as "the distributed ledger 150") on the service vendor 210 side and the service user 220 side, respectively, and sharing information between the distributed ledgers 150v and 150u. For example, the service vendor 210 and the service user 220 record the contract term, equipment information, usage status, measurement data, and the like in the distributed ledger 150 arranged in each of the service vendor 210 and the service user 220. The system 100 then carries out transactions of the measurement data between the service vendor 210 and the service user 220 by sharing and managing these pieces of information using the distributed ledger technology between the distributed ledger 150v and the distributed ledger 150u.

Note that, the operation of the system 100 may be independent of the equipment 20 and the service 30, and may be operated by a third party other than the service vendor 210 and the service user 220. In addition, when there is a plurality of service vendors 210, one service vendor 210 among the plurality of service vendors 210 may be in charge of operating the system 100.

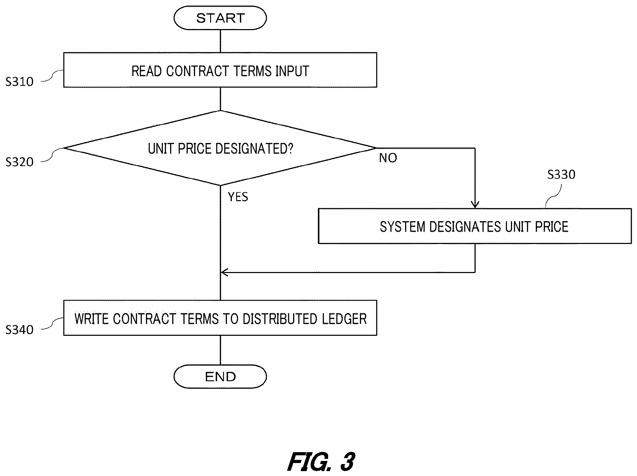

Fig. 3 illustrates an example of a flow for registration of the contract term by the contract term registration unit 120. At step 310, the contract term registration unit 120 accepts input of the contract term from at least either one of the service vendor 210 side or the service user 220 side. For example, the contract term registration unit 120 accepts input of a contract term pertaining to the usage of the equipment 20 from the service vendor 210 side. Similarly, the contract term registration unit 120 accepts input of a contract term pertaining to the usage of the service 30 from the service vendor 210 side, while accepting input of a contract term pertaining to disclosure of the measurement data from the service user 220 side. At this time, the contract term registration unit 120 may accept input of a contract term, for example, via a Web browser, a console, an application, and the like. The contract term registration unit 120 reads the input contract term.

At this time, the contract term registration unit 120 may read, as the terms of the contract, a contract period, payment methods (meter rate charging, cycle billing, or the like), payment means (legal currency, virtual currency, tokens, points, or the like), a unit price of the equipment 20, a unit price of the service 30, a definition of data, a recording method of the data (recording as raw data, encrypted recording, recording hash value, or the like), unit price of the data, releasing method of the data (providing the data, providing the access right, or the like), and the like, for example.

Here, an exemplary definition of data includes, for example, cases where data of a single sensor is defined and cases where a data group of a plurality of sensors is defined. In a case where data of a single sensor is defined, data may be defined based on the measurement target (temperature, flow rate, or the like). At this time, data may be defined together with information on the measurement location (tubing, outdoor, or the like). As an example, data may be defined such as flow rate data (no information on the measurement location), flow rate data of the tubing, outdoor temperature data, and the like.

On the other hand, it is quite often the case that the positional relationship between sensors, such as from the upstream to the downstream of the operation process, becomes important. That is, it can be considered that the information obtained by analysis may have higher value when using sensor data obtained by extracting only a part of the operation process than when using measurement data of the entire operation process or data obtained by continuously measuring a certain range of the process. Therefore, data of a sensor group including a combination of a plurality of sensors may be defined. In this case, since the positioning of each sensor becomes important, data may be defined based on the relationship of the individual measuring apparatus besides the measurement target (front and behind, above and below, or the like), and the measurement location. As an example, data may be defined, such as in-column temperature data and pressure data of an upper portion of a distillation column; in-column temperature data and pressure data of a middle portion of a distillation column; in-column temperature data and pressure data of a lower portion of a distillation column; temperature data, pressure data, and density data in a tank before processing; temperature data, pressure data, and density data in a tank during processing; temperature data, pressure data, and density data in a tank after processing; temperature data, pressure data, image data, and audio data of a working table at the upstream of a manufacturing process; temperature data, pressure data, image data, and audio data of a working table at the downstream of a manufacturing process; temperature data, pressure data, image data, and audio data of the entrance of a factory; temperature data, pressure data, image data, and audio data of a branch point on a loading path; temperature data, pressure data, image data, and audio data near the work area; and a combination thereof.

At step 320, the contract term registration unit 120 judges whether unit price has been designated in the contract term read at step 310. For example, in a case where a contract term pertaining to disclosure of the measurement data is registered, the contract term registration unit 120 judges whether a unit price of the measurement data to be disclosed has been designated by the service user 220.

In a case where it is judged that the unit price has not been designated at step 320, the system 100 designates the unit price at step 330. For example, the contract term registration unit 120 may automatically calculate a unit price of the measurement data based on the transaction price for measurement data of the same type that is currently registered to designate the unit price. At this time, the contract term registration unit 120 may use calculation method of a unit price, and for example, a mean value, median, and the like. In this manner, the contract term registration unit 120 may determine the unit price of the measurement data based on a transaction result of the measurement data.

Alternatively, or additionally, the contract term registration unit 120 may determine the unit price of the measurement data by an auction system. For example, the contract term registration unit 120 releases the contract term read at step 310 to the public for a predetermined period, and accepts desired bidding price for said measurement data. When the predetermined period has expired, the contract term registration unit 120 may then determine the highest desired price among the bidding received during said period as the unit price of the measurement data.

In a case where the unit price is designated by the system 100 at step 330, the contract term registration unit 120 writes the contract term read at step 310 and the unit price designated by the system 100 at step 330 to the distributed ledger 150, at step 340. On the other hand, in a case where it is judged that the unit price has been designated at step 320, the contract term registration unit 120 writes the contract term read at step 310 to the distributed ledger 150, at step 340.

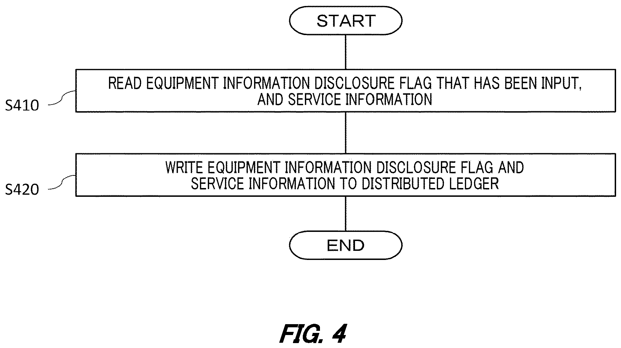

Fig. 4 illustrates an example of a flow for registration of information related to the equipment 20 and services 30 by the equipment information registration unit 130. At step 410, the equipment information registration unit 130 reads the information disclosure flag related to the equipment 20 that has been input, and information related to the service 30. For example, the equipment information registration unit 130 accepts user inputs via a Web browser, a console, an application, and the like, and acquires, for each of the equipment 20, an electronic signature for identifying the equipment 20 utilized by the service user 220, and the disclosure flag indicating whether the measurement data collected from the equipment 20 can be disclosed. The equipment information registration unit 130 acquires, from the service user 220, for the equipment 20a, the disclosure flag = 1 indicating that the measurement data acquired from the equipment 20a is available for disclosure to the service vendor 210, for example. Similarly, the equipment information registration unit 130 acquires, from the service user 220, for the equipment 20b, the disclosure flag = 1 indicating that the measurement data acquired from the equipment 20b is available for disclosure to the service vendor 210. On the other hand, the equipment information registration unit 130 acquires, from the service user 220, for the equipment 20c, the disclosure flag = 0 indicating that the measurement data acquired from the equipment 20c is not available for disclosure to the service vendor 210. Note that, the service user 220 can change such disclosure flags freely at any timing in real time. The equipment information registration unit 130 acquires the disclosure flag thus set, together with an electronic signature for identifying the equipment 20. In addition, the equipment information registration unit 130 acquires information for identifying the service 30 utilized by the service user 220. The equipment information registration unit 130 then reads these pieces of information acquired.

At step 420, the equipment information registration unit 130 writes the information disclosure flag related to the equipment 20 and information related to the service 30 read at step 410 to the distributed ledger 150. As an example, the equipment information registration unit 130 writes, for the equipment 20a utilized by the service user 220, the disclosure flag = 1 together with an electronic signature of the equipment 20a to the distributed ledger 150. Similarly, the equipment information registration unit 130 writes, for the equipment 20b utilized by the service user 220, the disclosure flag = 1 together with an electronic signature of the equipment 20b to the distributed ledger 150. On the other hand, the equipment information registration unit 130 writes, for the equipment 20c utilized by the service user 220, the disclosure flag = 0 together with an electronic signature of the equipment 20c to the distributed ledger 150. In addition, the equipment information registration unit 130 writes the information for identifying the service 30 utilized by the service user 220 to the distributed ledger 150.

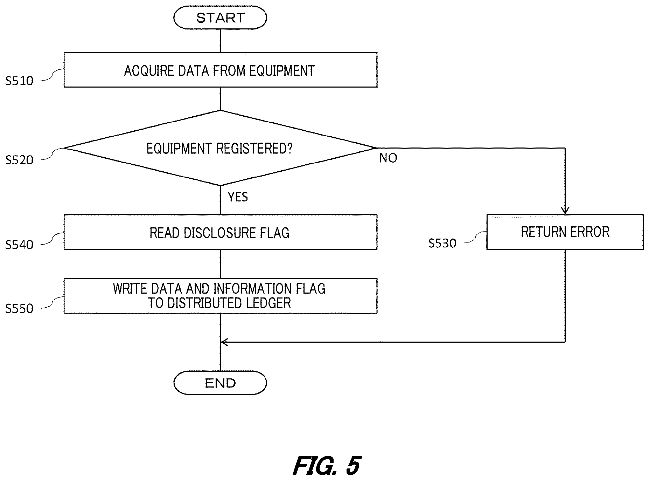

Fig. 5 illustrates an example of a flow for recording of measurement data by the usage status recording unit 140. At step 510, the usage status recording unit 140 acquires the measurement data from the equipment 20 collected by the data collection unit 110.

At step 520, the usage status recording unit 140 judges whether the measurement data acquired at step 510 is the measurement data from the equipment 20 that is registered. At this time, the usage status recording unit 140 may judge, for example, whether the electronic signature provided to the measurement data coincides with the electronic signature registered by the equipment information registration unit 130. In a case where the measurement data is not from the registered equipment 20, that is, where the electronic signature provided to the measurement data does not coincide with the electronic signature registered by the equipment information registration unit 130, the usage status recording unit 140 returns an error at step 530 and ends the process.

On the other hand, in a case where the measurement data is from registered equipment 20, that is, where the electronic signature provided to the measurement data coincides with the electronic signature registered by the equipment information registration unit 130, the usage status recording unit 140 reads the disclosure flag of said equipment 20 at step 540.

Then, at step 550, the usage status recording unit 140 records the measurement data acquired at step 510 and the disclosure flag read at step 540 to the distributed ledger 150.

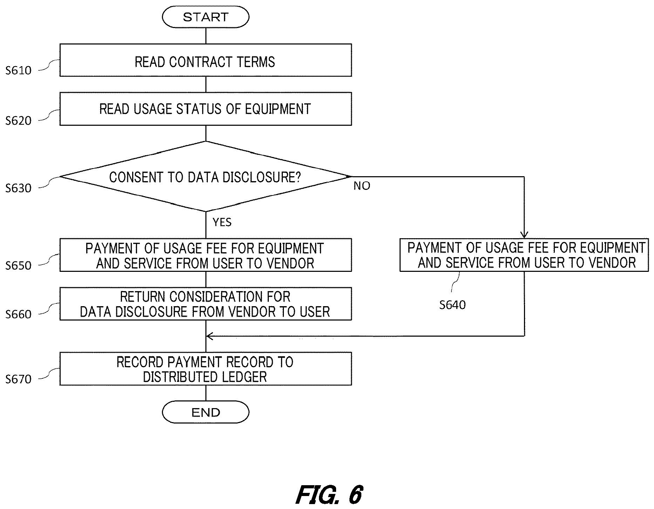

Fig. 6 illustrates an example of a flow of processing for charging by the system 100 in response to disclosure of the data. Note that, it is assumed that a usage contract of the equipment 20 and a usage contract of the service 30 have already been concluded between the service vendor 210 and the service user 220. In this state, at step 610, the contract selection unit 160 selects a contract for disclosure of the measurement data acquired from the equipment 20 utilized by the service user 220, in response to input from the service vendor 210 side, for example. The charging processing unit 190 reads the term of the contract selected by the contract selection unit 160.

At step 620, the judgement unit 170 reads the usage status of the equipment 20 utilized by the service user 220.

At step 630, the judgement unit 170 then judges whether the equipment 20 agrees to the disclosure of the measurement data, based on the disclosure flag at the usage status that has been read. As an example, in a case where the measurement data from the equipment 20 is recorded together with the disclosure flag = 0, since the equipment 20 does not agree to disclosure of the measurement data, the judgement unit 170 judges that the disclosure contract for the measurement data has not been concluded between the service vendor 210 and the service user 220. The judgement unit 170 provides the charging processing unit 190 with the judgement result.

In a case where the disclosure contract for the measurement data has not been concluded between the service vendor 210 and the service user 220, at step 640, the charging processing unit 190 performs processing for charging for payment of the usage fee of the equipment 20 and the service 30 from the service user 220 to the service vendor 210.

At this time, as an example, the charging processing unit 190 recognizes the unit price of the equipment 20 from the contract term registered by the contract term registration unit 120. In addition, the charging processing unit 190 recognizes the usage time of the equipment 20 from the usage status recorded by the usage status recording unit 140. The charging processing unit 190 then calculates the product of the unit price of the equipment 20 and the usage time of the equipment 20 as the usage fee of the equipment 20. Similarly, the charging processing unit 190 recognizes the unit price of the service 30 from the contract term registered by the contract term registration unit 120. In addition, the charging processing unit 190 recognizes the usage time of the service 30 from the usage status recorded by the usage status recording unit 140. The charging processing unit 190 then calculates the product of the unit price of the service 30 and the usage time of the service 30 as the usage fee of the service 30. The charging processing unit 190 then performs processing for charging of a sum of the calculated usage fee of the equipment 20 and the usage fee of the service 30 as the usage fee of the equipment 20 and the service 30 to be paid by the service user 220 to the service vendor 210.

On the other hand, at step 630, in a case where the measurement data from the equipment 20 is recorded together with the disclosure flag = 1, the judgement unit 170 judges that the disclosure contract of the measurement data has been concluded between the service vendor 210 and the service user 220, since the equipment 20 has agreed to the disclosure of the measurement data. In this manner, the judgement unit 170 may judge whether the contract has been concluded based on the disclosure flag registered for each of the equipment 20. The judgement unit 170 provides the charging processing unit 190 with the judgement result.

In this case, the charging processing unit 190 performs processing for charging for payment of the usage fee of the equipment 20 and the service 30 from the service user 220 to the service vendor 210 at step 650, in a similar way as step 640. The processing for charging thus far applies to all cases regardless of whether the measurement data can be disclosed.

However, in a case where the service user 220 agrees to disclosure of the measurement data, at step 660, the charging processing unit 190 further returns an amount according to the consideration for disclosure of the measurement data from the service vendor 210 to the service user 220.

At this time, as an example, the charging processing unit 190 recognizes the unit price of the measurement data from the contract term registered by the contract term registration unit 120. In addition, the charging processing unit 190 recognizes the data disclosure amount from the information related to the amount of disclosed data provided from the data disclosure unit 180. The charging processing unit 190 then calculates the product of the unit price of the measurement data and the data disclosure amount as the data disclosure fee. In this manner, the charging processing unit 190 performs processing for charging of the calculated data disclosure fee as a consideration for disclosure of the measurement data to be returned from the service vendor 210 to the service user 220. In this manner, the charging processing unit 190 may perform processing for charging to the contractor based on the usage fee of at least either one of the equipment 20 and the service 30 using the equipment 20, and the consideration for disclosure of the measurement data. More specifically, the charging processing unit 190 may perform processing to return, to the user of the equipment 20 or the service 30 using the equipment 20, an amount according to the consideration for disclosure of the measurement data from the usage fee of at least either one of the equipment 20 or the service 30 using the equipment 20.

At step 670, in a case where the processing for charging has ended, the charging processing unit 190 records a payment record to the distributed ledger 150 and ends the process.

In this manner, the system 100 according to the present embodiment pre-registers the term of the contract for transaction of data collected from the equipment 20, and when the contract is concluded, discloses the data to the contractor, and also performs processing for charging an amount according to the consideration for the disclosure to the contractor. In this manner, in accordance with the system 100 according to the present embodiment, transactions of various pieces of information such as measurement data at a plant, for example, can be embodied. In addition, the system 100 according to the present embodiment charges the usage fee for the equipment 20 and the service 30 per usage according to the usage time or the like, for example, and also achieves the process of returning a consideration according to disclosure of the measurement data using the distributed ledger technology on the same system. In this manner, in accordance with the system 100 according to the present embodiment, micro payment can be realized at a lower cost than conventional methods. In addition, the system 100 according to the present embodiment adds value to measurement data that has not been clearly provided with value or that has not been in transaction at all until now, and enables transactions thereof. Conventionally, equipment 20 and services 30 has been mostly purchased outright, and the service vendor 210 were not able to grasp what kind of data the equipment 20 provided to the service user 220 had actually measured. However, in accordance with the system 100 according to the present embodiment, the service vendor 210 can acquire the measurement data from the service user 220 who agreed to disclosure of the measurement data. In this manner, the service vendor 210 can provide the service user 220 with improvement in the service 30 and new services. In addition, the service user 220 can return a consideration for disclosure of the measurement data, and can substantially reduce the usage fee of the equipment 20 and the service 30. In addition, since the system 100 according to the present embodiment can set a unit price for the measurement data as appropriate, the service user 220 can change the unit price of the measurement data to be disclosed freely at any time. In addition, since the system 100 according to the present embodiment can automatically designate the unit price of the measurement data by past transaction results or by an auction system, even when the market price of the unit price of the measurement data to be disclosed is unknown, the service user 220 can readily register the term of a disclosure contract of the measurement data.

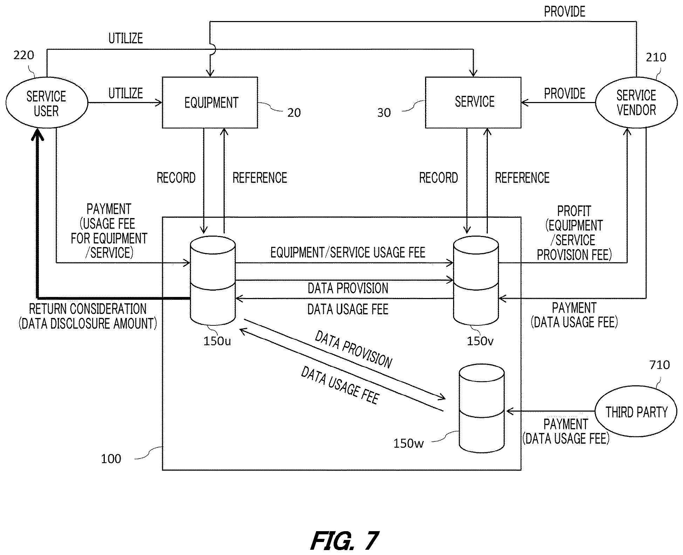

Fig. 7 illustrates another example of usage of the system 100 according to the present embodiment. In the present drawing, components having the same function and configuration as in Fig. 2 are given the same reference numerals, and the following describes only differing points. In the present drawing, the system 100 is used with a third party 710, in addition to the service vendor 210 and the service user 220. Here, the third party 710 is a party that is different from the service vendor 210 and the service user 220. In this another example of usage, in addition to a primary use in which the measurement data is disclosed to the service vendor 210, a secondary use in which the measurement data is disclosed to the third party 710 which is a party that is different from the service vendor 210 is enabled.

In this case, the system 100 further arranges a distributed ledger 150w on the third party 710 side. The system 100 then carries out transaction of the measurement data using the distributed ledger technology by sharing information among the distributed ledgers 150u, 150v, and 150w. The service user 220 then provides the third party 710, instead of or in addition to the service vendor 210, with various measurement data acquired by the equipment 20 during operation of its own plant. The third party 710 then pays the usage fee for the measurement data, allowing the service user 220 to return a consideration according to the disclosure fee for the measurement data.

Note that, in a case of a secondary use of the measurement data, the disclosure flag can be set to a different value according to the contractor. As an example, the equipment information registration unit 130 registers the disclosure flag = 2 for the equipment 20a, indicating that the measurement data is available for primary use and also for secondary use. That is, the equipment information registration unit 130 registers, for the measurement data acquired by the equipment 20a, that disclosure to the service vendor 210 is available and also disclosure to a third party is available. In addition, the equipment information registration unit 130 registers the disclosure flag =1 for the equipment 20b, indicating that the measurement data is available for primary use and also not available for secondary use. That is, the equipment information registration unit 130 registers, for the measurement data acquired by the equipment 20b, that disclosure to the service vendor 210 is available while disclosure to a third party is not available. In addition, the equipment information registration unit 130 registers the disclosure flag = 0 for the equipment 20c, indicating that the measurement data is unavailable for primary use and also unavailable for secondary use. That is, the equipment information registration unit 130 registers, for the measurement data acquired by the equipment 20c, that disclosure to the service vendor 210 is available and also disclosure to a third party is unavailable. Thus, the equipment information registration unit 130 may register a different value in the disclosure flag according to the contractor in a manner such that the measurement data is disclosed to the service vendor while the measurement data is not disclosed to the third party, for example. In this manner, the system 100 may, for example, set the measurement data of the equipment 20a to be available for disclosure to both of the service vendor 210 and the third party 710, while setting the measurement data of the equipment 20b to be available for disclosure to the service vendor 210 but unavailable for disclosure to the third party 710.

In addition, in a case of secondary use of the measurement data, the judgement unit 170 may, for example, accept input or the like by the third party 710, and judge that a contract has been concluded when it is indicated, by use of a consent button or the like, that the third party 710 has agreed to the contract of the measurement data which has been set as the disclosure flag = 2, that is, available for disclosure to third parties as well.

Thus, according to this another example of usage, the system 100 also supports disclosure of the measurement data from the service user 220 to the third party 710, instead of, or in addition to disclosure of the measurement data from the service user 220 to the service vendor 210. In this manner, the service user 220 can return more consideration for disclosure of the measurement data, and can further substantially reduce the usage fee of the equipment 20 and the service 30.

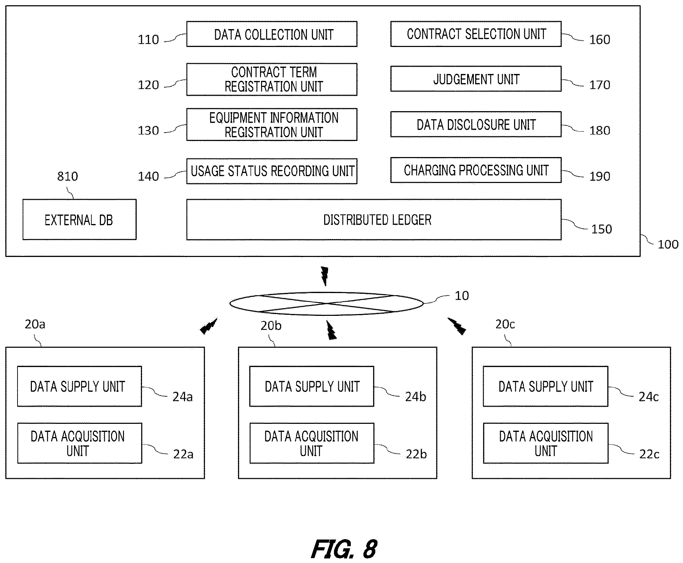

Fig. 8 illustrates a system 100 according to a variant of the present embodiment, together with a communication network 10 and equipment 20. In the present drawing, components having the same function and configuration as in Fig. 1 are given the same reference numerals, and the following describes only differing points. In the present drawing, the system 100 further includes an external database 810. In the system 100, when recording the measurement data collected from the equipment 20 to the distributed ledger, if the collected measurement data is directly written into the distributed ledger, the amount of data becomes enormous. In addition, the measurement data collected from the equipment 20 may also include data requiring high confidentiality. Therefore, the system 100 according to the present modified example manages the measurement data using the external database 810, in addition to the distributed ledger 150.

In the present modified example, the system 100 records the measurement data itself, or so-called raw data, collected by the data collection unit 110 to the external database 810. The system 100 may then calculate a hash value using a hash function on a batch of certain size of measurement data, and record only the calculated hash value to the distributed ledger 150. That is, the system 100 may record a hash value obtained by hashing the measurement data to the distributed ledger 150, and record the measurement data itself to an external database 810 which is another database that is different from the distributed ledger 150.

In this manner, in accordance with the system 100 according to the present modified example, the amount of data of the measurement data to be recorded to the distributed ledger 150 can be reduced, and also, data requiring high confidentiality can be prevented from being known to a party other than the contractor of the disclosure contract of the measurement data.

Various changes or improvements can be added to the above-described system 100. For example, the system 100 may further include a searching unit configured to search for a contract. The searching unit may, for example, accept user input or the like, and acquire a request for a contract desired by the user of the system 100 to be concluded. The searching unit may then search for a contract that at least partially satisfies the acquired request among a plurality of contract terms registered by the contract term registration unit 120, and return the search result to the user of the system 100. In this manner, the user of the system 100 can proceed to conclusion of a contract according to the request, by referring to the search result and selecting, via a contract selection unit 160, a contract they desire to conclude.

At this time, the searching unit may search for a contract using at least one item in the contract terms as a search key. For example, the searching unit may search through a plurality of contracts using payment means, among the contract terms, as a search key, and return, as the search result, a contract for which it is registered that points can be used as payment means. In addition, the searching unit may search through a plurality of contracts using a definition of data, among the contract terms, as a search key, and return, as the search result, a contract for which "flow rate data of the tubing" is defined for the definition of data.

In addition, the searching unit may search for a contract using a feature of the measurement data, instead of or in addition to the at least one item in the contract terms, as a search key. For example, the searching unit may use a feature of the "outdoor temperature data" among the acquired measurement data as a search key, and return, as the search result, a contract pertaining to measurement data in which the "outdoor temperature data" exceeds a predetermined threshold (for example, an abnormal value or the like). At this time, the searching unit may together return, as the search result, a period at least including a feature point of the data included in the search key. That is, in a case where measurement data in which the "outdoor temperature data" exceeded an abnormal value is searched, the searching unit may together return, as a search result, a certain period including before and after the time point at which said abnormal value is exceeded.

Note that, the searching unit can devise a way such that it cannot be known to others how the search has been performed. For example, the searching unit may perform a search using homomorphic encryption, by which calculation is enabled while still being encrypted. As an example, the searching unit preferably performs a search using additive homomorphic encryption, since a search can be performed without being known to others how the search has been performed, even when the measurement data to be searched itself is encrypted.

Various embodiments of the present invention may be described with reference to flowcharts and block diagrams whose blocks may represent (1) steps of processes in which operations are performed or (2) sections of devices responsible for performing operations. Certain steps and sections may be implemented by dedicated circuitry, programmable circuitry supplied with computer-readable instructions stored on computer-readable media, and/or processors supplied with computer-readable instructions stored on computer-readable media Dedicated circuitry may include digital and/or analog hardware circuits and may include integrated circuits (IC) and/or discrete circuits. Programmable circuitry may include reconfigurable hardware circuits including logical AND, OR, XOR, NAND, NOR, and other logical operations, flip-flops, registers, memory elements, etc., such as field-programmable gate arrays (FPGA), programmable logic arrays (PLA), etc.

Computer-readable media may include any tangible device that can store instructions for execution by a suitable device, such that the computer-readable medium having instructions stored therein comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, JAVA (registered trademark), C++, etc., and conventional procedural programming languages, such as the "C" programming language or similar programming languages.

Computer-readable instructions may be provided to a processor of a general purpose computer, special purpose computer, or other programmable data processing device, or to programmable circuitry, locally or via a local area network (LAN), wide area network (WAN) such as the Internet, etc., to execute the computer-readable instructions to create means for performing operations specified in the flowcharts or block diagrams. Examples of processors include computer processors, processing units, microprocessors, digital signal processors, controllers, microcontrollers, etc.

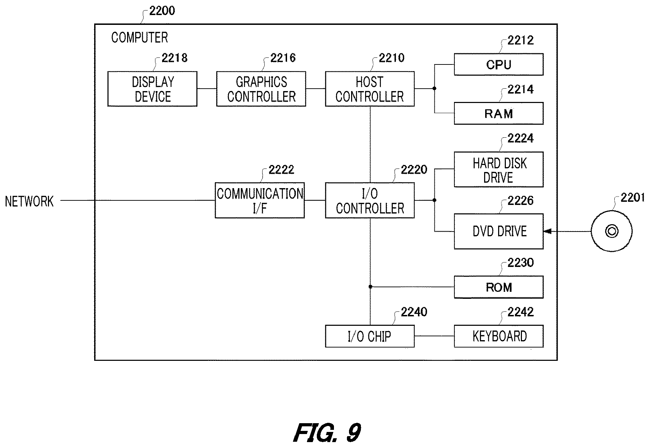

Fig. 9 illustrates an example of a computer 2200 through which a plurality of aspects of the present invention may be entirely or partially embodied. A program that is installed in the computer 2200 can cause the computer 2200 to function as or perform operations associated with apparatuses of the embodiments of the present invention or one or more sections thereof, or perform the operations or the one or more sections, and/or cause the computer 2200 to perform processes of the embodiments of the present invention or steps of the processes. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer-readable media such as the DVD-ROM 2201 or the IC card. The program is read from the computer-readable media, installed into the hard disk drive 2224, RAM 2214, or ROM 2230, which are also examples of computer-readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer-readable media on or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the invention is not limited to the above described embodiments. It is apparent to persons skilled in the art that various changes or improvements can be added to the above-described embodiments. It is also apparent from the scope of the claims that the embodiments added with such changes or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: communication network
20: equipment
22: data acquisition unit
24: data supply unit
30: service
100: system
110: data collection unit
120: contract term registration unit
130: equipment information registration unit
140: usage status recording unit
150: distributed ledger
160: contract selection unit
170: judgement unit
180: data disclosure unit
190: charging processing unit
210: service vendor
220: service user
710: third party
810: external database
2200: computer
2201: DVD-ROM
2210: host controller
2212: CPU
2214: RAM
2216: graphics controller
2218: display device
2220: input/output controller
2222: communication interface
2224: hard disk drive
2226: DVD-ROM drive
2230: ROM
2240: input/output chip
2242: keyboards

## Claims

1. A system comprising:
a data collection unit configured to collect, from equipment capable of acquiring measurement data obtained by measuring physical quantities of a measurement target, the measurement data;
a contract term registration unit configured to register a term of a contract to disclose the measurement data to a contractor;
a judgement unit configured to judge whether the contract has been concluded;
a data disclosure unit configured to disclose the measurement data to the contractor in response to conclusion of the contract; and
a charging processing unit configured to perform processing for charging an amount according to a consideration for disclosure of the measurement data to the contractor, based on the term of the contract.

2. The system according to Claim 1, further comprising an equipment information registration unit configured to register, for each of the equipment, a disclosure flag indicating whether the measurement data can be disclosed, wherein
the judgement unit is configured to judge whether the contract has been concluded based on the disclosure flag.

3. The system according to Claim 2, wherein the disclosure flag can be set to a different value according to the contractor.

4. The system according to any one of Claims 1 to 3, wherein the charging processing unit is configured to perform processing for charging to the contractor based on a usage fee for at least either one of the equipment or a service using the equipment, and the consideration.

5. The system according to Claim 4, wherein the charging processing unit is configured to perform processing for returning, to a user of the equipment or the service, an amount according to the consideration from the usage fee.

6. The system according to any one of Claims 1 to 5, wherein the measurement data collected by the data collection unit is managed using a distributed ledger.

7. The system according to Claim 6, wherein a hash value obtained by hashing the measurement data is recorded in the distributed ledger, and the measurement data is recorded in another database that is different from the distributed ledger.

8. The system according to any one of Claims 1 to 7, wherein the contract term registration unit is capable of setting a unit price for the measurement data.

9. The system according to Claim 8, wherein the contract term registration unit determines the unit price for the measurement data based on a transaction result of the measurement data.

10. The system according to Claim 8, wherein the contract term registration unit determines the unit price for the measurement data by an auction system.

11. The system according to any one of Claims 1 to 10, wherein the data disclosure unit supplies the measurement data to the contractor in response to conclusion of the contract.

12. The system according to any one of Claims 1 to 10, wherein the data disclosure unit permits access to the measurement data by the contractor in response to conclusion of the contract.

13. A method performed by a system comprising:
collecting, by the system, from equipment capable of acquiring measurement data obtained by measuring physical quantities of a measurement target, the measurement data;
registering, by the system, a term of a contract to disclose the measurement data to a contractor;
judging, by the system, whether the contract has been concluded;
disclosing, by the system, the measurement data to the contractor in response to conclusion of the contract; and
performing, by the system, processing for charging of an amount according to a consideration for disclosure of the measurement data to the contractor, based on the term of the contract.

14. A program that, when executed by a computer, causes the computer to function as:
a data collection unit configured to collect, from equipment capable of acquiring measurement data obtained by measuring physical quantities of a measurement target, the measurement data;
a contract term registration unit configured to register a term of a contract to disclose the measurement data to a contractor;
a judgement unit configured to judge whether the contract has been concluded;
a data disclosure unit configured to disclose the measurement data to the contractor in response to conclusion of the contract; and
a charging processing unit configured to perform processing for charging an amount according to a consideration for disclosure of the measurement data to the contractor, based on the term of the contract.
